# EUROPEAN PATENT SPECIFICATION

(11) **EP 4 237 900 B1**
(45) Date of publication and mention of the grant of the patent: **26.08.2026**
(21) Application number: 21802272.1
(22) Date of filing: 28.10.2021
(51) Int. Cl.: G02B 27/00, G02B 5/00, G02B 13/14, G02B 26/10

(54) **AN ELECTRO-OPTICAL SYSTEM AND A METHOD OF DESIGNING THE SAME**
ELEKTROOPTISCHES SYSTEM UND VERFAHREN ZU SEINEM ENTWURF
SYSTÈME ÉLECTRO-OPTIQUE ET PROCÉDÉ DE CONCEPTION ASSOCIÉ

(30) Priority: 29.10.2020 GB 202017140
(43) Date of publication of application: 06.09.2023
(73) Proprietor: Leonardo UK Ltd, London SW1Y 6AF (GB)
(72) Inventor: EDWARDS, Michael, London SW1Y 6AF (GB)
(74) Representative: Tolfree, Adam Joseph Benjamin
(86) International application number: PCT/EP2021/079967
(87) International publication number: WO 2022/090385

(56) References cited:
- EP-A1- 1 527 366
- EP-B1- 1 527 366
- US-A1- 2005 030 644
- US-A1- 2006 269 215
- US-B1- 9 557 513

## Description

The present invention relates to an electro-optical system and a method of designing the same that includes a focal plane array arranged to sense radiated optical energy from a scene and convert it to an electrical signal.

US2005/030644 & US9557513 describe optical systems comprising transmissive optical correctors.

In many applications where such a system is deployed the system includes an environmental window that shields the focal plane array and optical train from environmental conditions. A required characteristic of the environmental window is that it is transparent to operating wavelengths of the optical system.

The ideal optical geometries for an environmental window are planer or a spherical dome of uniform thickness. These geometries ensure light is refracted uniformly to minimise aberrations such as coma and astigmatism which otherwise cause a blurred image on the focal plane array. This is especially important when the optical system includes means to move the line of sight of the focal plane array to allow sensing over a wider field of regard.

Sometimes it is necessary to shape and/or size the environmental window away from the optical ideal to conform to other requirements of the host platform. Windows adapted in this way are known as conformal windows.

For example, in applications where the optical system is mounted on a platform intended to travel at high speed, a planer or hemisphere window can be detrimental to the aerodynamics of the platform.

Where the system is mounted in the nose of a platform, a solution commonly employed is to graduate a hemispherical environmental window into an ogive shape of the nose. Achieving a necessary fineness ratio of the ogive to give the desired aerodynamic performance often means compromising on the semi-diameter of the environmental window. Depending on how small a semi-diameter is needed, it is often difficult or impractical to incorporate a steering mechanism into the system thus compromising the extent of the field of regard of the sensor apparatus.

An alternative solution is to use a window with a conformal external surface geometry that is more aerodynamic than a hemisphere, together with an optical corrector element having a geometry shaped to correct for the aberrations created as a result of the non-ideal optical geometry of the environmental window.

In the currently used method for designing a system using the latter solution, the desired conformal outer surface geometry of the environmental window is produced by optimising for the desired platform functionality, for example, aerodynamics. This geometry is modelled in a CAD package rather than a piece of optical design software, although certain constraints, e.g. maximum degree of curvature of the surface, may be applied.

The desired conformal outer surface geometry of the environmental window is modelled as a mesh grid. Then, a surface sagitta equation is constructed through the addition of further terms to a base biconic equation to define a surface that fits the points on the mesh of the desired surface geometry as accurately as possible.

The constructed equation is used to constrain the surfaces of the corrector element in order to correct for wavefront errors.

Although a problem is that even when a biconic equation provides a good fit with the point set, the surface defined by the equation may deviate from the manufactured exterior surface of the environmental window unpredictably in areas between the points of the point set model. As a result, the corrector surfaces which are manufactured based on the biconic equation may not correct for wavefront error in these regions, leading to non-uniformity in wavefront error between these points.

According to the first aspect of the invention there is provided a method of designing an electro-optical system according to claim 1.

According to a second aspect of the invention there is provided an electro-optical system according to claim 6.

At the root of the invention is the departure from the long standard practice of 'fitting' a biconic equation to a pre-designed exterior surface of an environmental window.

In contrast, by designing the exterior surface of environmental window to a specific biconic equation the exterior surface is defined by, rather than approximated by, the biconic equation. In this novel design process the biconic equation is developed, e.g. by adding further terms, to define a surface whose shape conforms to the other requirements of the host platform.

Then by using matched equations based on this biconic equation to define the surfaces of the corrector element a more uniform wave front error and magnification can be achieved across the whole field of regard compared with the prior art method.

For the purposes of this specification, biconic equations may be considered matched if they have the same number and form of meaningful additional terms, where an additional term is considered meaningful if it alters the sagitta of any point on the surface by more than 100nm from the nominal base biconic equation.

It will be appreciated that the coefficients of the variables within one term of one matched equation will usually differ from the coefficients of variables within equivalent terms in another of the matched equations as the angle of curvature for each surface will differ because of the surface's relative position to the FPA. In the case of the surfaces of the corrector, this is due the need to correct for aberrations resulting from the deviation of the geometry of the external surface of the environmental window from the optical ideal.

A discovery that emerged from using this new design approach was that an environmental window with an exterior surface that does not deviate from the biconic equation, i.e. a surface defined by the biconic equation without meaningful further terms, and in which cₓ = c_{y} and kₓ = k_{y} provides unexpectedly good aerodynamic properties. An advantage of using such as surface is that it is easier to manufacture because less material needs to be removed. It also makes it easier to measure, e.g. to ensure the surface geometry has been accurately formed.

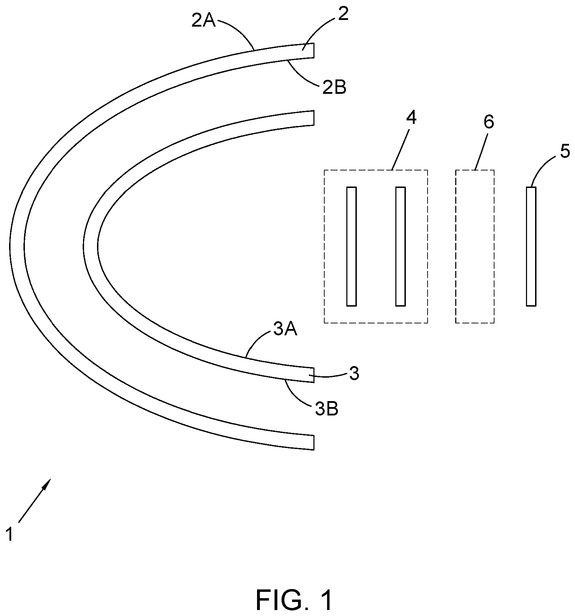

The invention will now be described by way of example with reference to the figure, which illustrates a simplified schematic of an electro-optical system 1.

The system 1 comprises an environmental window 2, a static corrective element 3 that is transmissive in the waveband that the system 1 operates, an optical train 4, a focal plane array (FPA) sensor 5 and a steering mechanism 6 to adjust the line of sight of the FPA 5 within the field of regard. The optical train 4 is arranged to form an image of a scene on the FPA. The environmental window 2, optical corrector 3 and optical train 4 are all transmissive to the operating wavelengths of the optical system.

The specific type of steering mechanism employed is unimportant and a number of suitable examples will be known to those skilled in the art including a gimballed steerable mirror.

In order to provide characteristics to meet requirements of the system's 1 host platform other than optical performance, e.g. improved aerodynamics, the geometry of the exterior surface 2A of the environmental window 2 is non-spherical and non-planar and is defined by the following surface sagitta equation: $Z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}}$ also known as the base biconic equation, in which: Z is the Sagitta whereby z=0 is located at the intersection of the surface and optical axis; c is curvature in x or y where in x and y are orthogonal directions about the optical axis; k is the conic constant in x or y; and cₓ=1/Rₓ and c_{y}=1/R_{y} where R is radius of curvature in x or y.

Optionally, to provide the necessary conformal characteristics, the surface sagitta equation may comprise one or more further terms that define aspheric and/or freeform deviations from the base biconic equation: e.g.: $z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}} + {\sum }_{i = 1}^{n} {α}_{i} {x}^{i} + {\sum }_{i = 1}^{n} {β}_{i} {y}^{i} + {\sum }_{i = 1}^{n} {A}_{i} {Z}_{i} \left(ρ, φ\right)$ where α, β are the i^{th} aspheric coefficients in X and Y, respectively. A is the i^{th} Zernike coefficient in ρ and φ, which define the radial distance from the optical axis and the radial angle, respectively.${\sum }_{i = 1}^{n} {α}_{i} {x}^{i}$ and ${\sum }_{i = 1}^{n} {β}_{i} {y}^{i}$ are examples of further terms that define aspheric deviations in x and y respectively. ${\sum }_{i = 1}^{n} {A}_{i} {Z}_{i} \left(ρ, φ\right)$ is an example of a further term that defines a freeform deviation. The surface sagitta equation may comprise any number of any of these forms of further terms in order to provide the desired surface geometry depending on the surface characteristics required.

The geometries of the interior surface 2B of the environmental window, the inner surface 3A of the static corrector element 3 and outer surface 3B of the static corrector element are each defined by a separate surface sagitta equation that exactly match, i.e. have the same number of each form of further terms, the surface sagitta equation defining the geometry of the exterior surface 2A of the environmental window.

Within certain bounds of rate of change of curvature in both x and y, using matched equations to define the surface geometries of the environmental window and corrector element allows a substantially uniform wavefront error, which may be non-zero, across the field of regard, and minimises variation in magnification e.g. to within ≤ 5%, over the field of regard.

In an example application, the apparatus comprises a medium wave infrared (MWIR) FPA and the external surface 2A of the environmental window is conformal in order to provide improved aerodynamic performance. The environmental window 2 is comprised from a first material e.g. sapphire or sapphire like material. The corrective element is comprised from a second material, e.g. silicon, of a higher refractive index than the first material. The first and second materials have homogenous refractive indexes such that both the environmental window and corrector have uniform refractive indexes.

By using a higher refractive index material for the corrector, the corrector can have a larger radius of curvature to fit within the space provided by the environmental window and allows maximum space to be available for steering about the field of regard. This is whilst still having the optical power necessary to compensate for wavefront errors resulting from the non-ideal geometry of the conformal environmental window.

A uniform wavefront error across the field of regard is particularly desirable as it allows the optical chain to substantially correct the wavefront error irrespective of the line of sight of the FPA within the field of regard.

In an example method of designing the system, a designer, e.g. an optical engineer manipulates the surface sagitta equation described above within certain bounds of rate of change of curvature in both x and y in order to define a surface geometry that conforms to one or more non-optical requirements of a host platform. For example, where the requirement is an improved aerodynamic surface, i.e. creates less drag, one or more prototype environmental windows may be created (e.g. physical and/or virtual models) having exterior surface geometries that are defined by variant surface sagitta equations that may provide the desired conformity. These prototypes (physical or virtual) are tested, e.g. in a wind tunnel or using computer modelling to determine which performs best in order to select the equation to use to define the exterior surface of the environmental window

Further surface sagitta equations are developed that match the selected equation in order to define the interior surface of the environmental window and the surfaces of the static corrector element. The value of the variables within each matching surface sagitta equation being manipulated to minimise variation in magnification across the field of regard and to provide a substantially uniform wavefront error across the field of regard.

The optical train 4 can then be designed to correct for the uniform wavefront error.

In an example, each of the matching surface sagitta equations used to define the exterior and interior surfaces of the environmental window and inner and outer surfaces of the corrector element, are based on the base biconic equation in which cₓ =c_{y}, kₓ = k_{y} and without any meaningful further terms, i.e. no further term that individually alters the sagitta at any point on the surface by more than 100nm from the base biconic equation.

## Claims

1. A method of designing an electro-optical system (1), the electro-optical system comprising:
a non-hemispherical, non-planar, environmental window (2);
a transmissive optical corrector (3);
an optical train (4);
a sensor (5) disposed to receive optical rays that have passed through the window (2), optical corrector (3) and optical train (4); and
a steering means (6) adapted to steer the line of sight of the sensor about the field of regard;
**characterised in that** the method comprises designing the surface geometry of the environmental window (2) and the surface geometry of the optical corrector (3) using matched surface sagitta equations wherein the surface sagitta equations comprise:
a) the base biconic equation: $z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}}$ in which:
Z is the Sagitta whereby z=0 is located at the intersection of the surface and optical axis; c is curvature in x or y where in x and y are orthogonal directions about the optical axis; k is conic constant in x or y; and cₓ=1/Rₓ c_{y}=1/R_{y} R is radius of curvature in x or y;
and
b) optionally, one or more further terms that define aspheric and/or or free form deviations from the base biconic equation,
to provide a substantially uniform wave front error and substantially uniform magnification across the field of regard; wherein surface sagitta equations are considered matched if they have the same number and form of meaningful additional terms, and where an additional term is considered meaningful if it alters the sagitta of any point on the surface by more than 100nm from the base biconic equation.

2. A method according to claim 1 wherein the optical corrector (3) is a static corrector.

3. A method according to claim 1 or 2 wherein the optical corrector (3) has uniform refractive index.

4. A method according to claim 1, 2 or 3 wherein cx =cy and kₓ = k_{y} and surface sagitta equation comprises no further meaningful terms.

5. A method according to any previous claim wherein the optical train (4) is adapted to form an image on the sensor (5).

6. An electro-optical system (1) comprising:
a non-hemispherical, non-planar, environmental window (2);
a transmissive optical corrector (3);
an optical train (4);
a sensor (5) disposed to receive optical rays that have passed through the window (2), optical corrector (3) and optical train (4); and
a steering means (6) adapted to steer the line of sight of the sensor about the field of regard;
**characterised in that** the surface geometry of the environmental window (2) and the surface geometry of the optical corrector (3) are defined by matched surface sagitta equations wherein the surface sagitta equation comprise:
a) the base biconic equation: $z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}}$ in which:
Z is the Sagitta whereby z=0 is located at the intersection of the surface and optical axis; c is curvature in x or y where in x and y are orthogonal directions about the optical axis; R is radius of curvature in x or y; k is conic constant in x or y
and,
b) optionally one or more further terms that define aspheric and/or or free form deviations from the base biconic equation,
such as to achieve a substantially uniform wave front error and substantially uniform magnification across the field of regard;
wherein surface sagitta equations are considered matched if they have the same number and form of meaningful additional terms, and where an additional term is considered meaningful if it alters the sagitta of any point on the surface by more than 100nm from the base biconic equation.

## Patentansprüche

1. Verfahren zum Entwerfen eines elektrooptischen Systems (1), wobei das elektrooptische System Folgendes umfasst:
ein nicht halbkugelförmiges, nicht planares Umgebungsfenster (2);
einen durchlässigen optischen Korrektor (3);
einen Strahlengang (4);
einen Sensor (5), der angeordnet ist, um optische Strahlen zu empfangen, die durch das Fenster (2), den optischen Korrektor (3) und den Strahlengang (4) hindurchgegangen sind; und
eine Lenkeinrichtung (6), die ausgelegt ist, um die Sichtlinie des Sensors um das Betrachtungsfeld zu lenken;
**dadurch gekennzeichnet, dass** das Verfahren Entwerfen der Oberflächengeometrie des Umgebungsfensters (2) und der Oberflächengeometrie des optischen Korrektors (3) unter Verwendung zusammenpassender Oberflächen-Sagitta-Gleichungen umfasst, wobei die Oberflächen-Sagitta-Gleichungen Folgendes umfassen:
a) die bikonische Basisgleichung: $z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}}$ in der:
Z die Sagitta ist, wobei z=0 am Schnittpunkt der Oberfläche und der optischen Achse liegt; c die Krümmung in x oder y ist, wobei in x und y orthogonale Richtungen um die optische Achse sind; k die konische Konstante in x oder y ist; und cₓ=1/Rₓ c_{y}=1/R_{y} R Krümmungsradius in x oder y ist;
und
b) optional einen oder mehrere weitere Terme, die asphärische und/oder Freiformabweichungen von der bikonischen Basisgleichung definieren,
um einen im Wesentlichen einheitlichen Wellenfrontfehler und eine im Wesentlichen einheitliche Vergrößerung über das Betrachtungsfeld bereitzustellen; wobei Oberflächen-Sagitta-Gleichungen als zusammenpassend angesehen werden, wenn sie die gleiche Anzahl und Form von bedeutsamen zusätzlichen Termen aufweisen, und wobei ein zusätzlicher Term als bedeutsam angesehen wird, wenn er die Sagitta eines beliebigen Punkts auf der Oberfläche um mehr als 100 nm von der bikonischen Basisgleichung ändert.

2. Verfahren nach Anspruch 1, wobei der optische Korrektor (3) ein statischer Korrektor ist.

3. Verfahren nach Anspruch 1 oder 2, wobei der optische Korrektor (3) einen einheitlichen Brechungsindex aufweist.

4. Verfahren nach Anspruch 1, 2 oder 3, wobei cx =cy und kₓ = k_{y} und die Oberflächen-Sagitta-Gleichung keine weiteren bedeutsamen Terme umfasst.

5. Verfahren nach einem vorangehenden Anspruch, wobei der Strahlengang (4) ausgelegt ist, um ein Bild auf dem Sensor (5) auszubilden.

6. Elektrooptisches System (1), umfassend:
ein nicht halbkugelförmiges, nicht planares Umgebungsfenster (2);
einen durchlässigen optischen Korrektor (3);
einen Strahlengang (4);
einen Sensor (5), der angeordnet ist, um optische Strahlen zu empfangen, die durch das Fenster (2), den optischen Korrektor (3) und den Strahlengang (4) hindurchgegangen sind; und
eine Lenkeinrichtung (6), die ausgelegt ist, um die Sichtlinie des Sensors um das Betrachtungsfeld zu lenken;
**dadurch gekennzeichnet, dass** die Oberflächengeometrie des Umgebungsfensters (2) und die Oberflächengeometrie des optischen Korrektors (3) durch zusammenpassende Oberflächen-Sagitta-Gleichungen definiert sind, wobei die Oberflächen-Sagitta-Gleichung Folgendes umfasst:
a) die bikonische Basisgleichung: $z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}}$ in der:
Z die Sagitta ist, wobei z=0 am Schnittpunkt der Oberfläche und der optischen Achse liegt; c die Krümmung in x oder y ist, wobei in x und y orthogonale Richtungen um die optische Achse sind; R der Krümmungsradius in x oder y ist; k die konische Konstante in x oder y ist,
und
b) optional einen oder mehrere weitere Terme, die asphärische und/oder Freiformabweichungen von der bikonischen Basisgleichung definieren,
um so einen im Wesentlichen einheitlichen Wellenfrontfehler und eine im Wesentlichen einheitliche Vergrößerung über das Betrachtungsfeld zu erreichen;
wobei Oberflächen-Sagitta-Gleichungen als zusammenpassend angesehen werden, wenn sie die gleiche Anzahl und Form von bedeutsamen zusätzlichen Termen aufweisen, und wobei ein zusätzlicher Term als bedeutsam angesehen wird, wenn er die Sagitta eines beliebigen Punkts auf der Oberfläche um mehr als 100 nm von der bikonischen Basisgleichung ändert.

## Revendications

1. Procédé de conception d'un système électro-optique (1), le système électro-optique comprenant :
une fenêtre environnementale non hémisphérique, non plane (2) ;
un correcteur optique transmissif (3) ;
un train optique (4) ;
un capteur (5) disposé pour recevoir des rayons optiques qui ont traversé la fenêtre (2), le correcteur optique (3) et le train optique (4) ; et
un moyen de direction (6) adapté pour diriger la ligne de visée du capteur autour du champ de vision ;
**caractérisé en ce que** le procédé comprend la conception de la géométrie de surface de la fenêtre environnementale (2) et de la géométrie de surface du correcteur optique (3) à l'aide d'équations sagitta de surface appariées, les équations sagitta de surface comprenant :
a) l'équation biconique de base : $z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}}$ où :
Z est la sagitta moyennant quoi z=0 est situé à l'intersection de la surface et de l'axe optique ; c est la courbure en x ou y où en x et y sont des directions orthogonales autour de l'axe optique ; k est une constante conique en x ou y ; et cₓ=1/Rₓ c_{y}=1/R_{y} R est le rayon de courbure en x ou y ;
et
b) éventuellement, un ou plusieurs autres termes qui définissent des déviations asphériques et/ou de forme libre par rapport à l'équation biconique de base,
pour fournir une erreur de front d'onde sensiblement uniforme et un grossissement sensiblement uniforme dans le champ de vision ; dans lequel des équations sagitta de surface sont considérées comme appariées si elles présentent le même nombre et la même forme de termes supplémentaires significatifs, et où un terme supplémentaire est considéré comme significatif s'il modifie la sagitta de tout point de la surface de plus de 100 nm par rapport à l'équation biconique de base.

2. Procédé selon la revendication 1, dans lequel le correcteur optique (3) est un correcteur statique.

3. Procédé selon la revendication 1 ou 2, dans lequel le correcteur optique (3) présente un indice de réfraction uniforme.

4. Procédé selon la revendication 1, 2 ou 3, dans lequel cx =cy et kₓ = k_{y} et l'équation sagitta de surface ne comprend pas d'autres termes significatifs.

5. Procédé selon une quelconque revendication précédente, dans lequel le train optique (4) est adapté pour former une image sur le capteur (5).

6. Système électro-optique (1) comprenant :
une fenêtre environnementale non hémisphérique, non plane (2) ;
un correcteur optique transmissif (3) ;
un train optique (4) ;
un capteur (5) disposé pour recevoir des rayons optiques qui ont traversé la fenêtre (2), le correcteur optique (3) et le train optique (4) ; et
un moyen de direction (6) adapté pour diriger la ligne de visée du capteur autour du champ de vision ;
**caractérisé en ce que** la géométrie de surface de la fenêtre environnementale (2) et la géométrie de surface du correcteur optique (3) sont définies par des équations sagitta de surface appariées, l'équation sagitta de surface comprenant :
a) l'équation biconique de base : $z = \frac{{c}_{x} {x}^{2} + {c}_{y} {y}^{2}}{1 + \sqrt{1 - \left(1+{k}_{x}\right) {{c}_{x}}^{2} {x}^{2} - \left(1+{k}_{y}\right) {{c}_{y}}^{2} {y}^{2}}}$ où :
Z est la sagitta moyennant quoi z=0 est situé à l'intersection de la surface et de l'axe optique ; c est la courbure en x ou y où en x et y sont des directions orthogonales autour de l'axe optique ; R est le rayon de courbure en x ou y ; k est une constante conique en x ou y
et,
b) éventuellement un ou plusieurs autres termes qui définissent des déviations asphériques et/ou de forme libre par rapport à l'équation biconique de base,
de sorte à obtenir une erreur de front d'onde sensiblement uniforme et un grossissement sensiblement uniforme dans le champ de vision ;
dans lequel des équations sagitta de surface sont considérées comme appariées si elles présentent le même nombre et la même forme de termes supplémentaires significatifs, et où un terme supplémentaire est considéré comme significatif s'il modifie la sagitta de tout point de la surface de plus de 100 nm par rapport à l'équation biconique de base.
